# EUROPÄISCHE PATENTSCHRIFT

(11) **EP 1 219 789 B1**
(45) Veröffentlichungstag und Bekanntmachung des Hinweises auf die Patenterteilung: **04.10.2006**
(21) Anmeldenummer: 01128868.5
(22) Anmeldetag: 05.12.2001
(51) Int. Cl.: F01D 25/12, F01D 25/26, F02C 7/18

(54) **Kühlsystem und Verfahren zur Kühlung eines Strömungsmaschinengehäuses**
System and method for the cooling of a turbomachine casing
Système et méthode pour refroidir le carter d'une turbomachine

(30) Priorität: 23.12.2000 DE 10064895
(43) Veröffentlichungstag der Anmeldung: 03.07.2002
(73) Patentinhaber: Alstom Technology Ltd, 5400 Baden (CH)
(72) Erfinder: Belzner, Andreas, Dr., 79713 Bad Saeckingen (DE); Boehm, Fred, 5405 Baden-Daettwil (CH); Josuhn-Kadner, Burkhard, 79650 Schopfheim (DE)

(56) Entgegenhaltungen:
- EP-A- 1 046 787

## Beschreibung

### Technisches Gebiet

Die Erfindung betrifft ein Kühlsystem sowie ein Verfahren zur Kühlung thermisch beanspruchter Gehäuse oder Gehäuseteile bei Strömungsmaschinen, insbesondere bei einer Turbine, mit den Merkmalen des Oberbegriffs des Anspruchs 1 bzw. des Anspruchs 8.

### Stand der Technik

Um ein Gehäuse oder Gehäuseteile einer Strömungsmaschine, insbesondere einer Turbine, zu kühlen, wird dem Gehäuse Zuluft zugeführt, die überlicherweise aus der Umgebung des Gehäuses angesaugt wird. Bei der Durchströmung des Gehäuses wird diese Luft dann erwärmt und aus dem Gehäuse als Abluft abgeführt. Zu diesem Zweck besitzt ein übliches Kühlsystem eine Zuluftleitung, die einen Zuluftanschluß des Gehäuses mit einer Umgebung des Gehäuses verbindet, um durch die Zuluftleitung dem Gehäuse die Zuluft zuzuführen. Des weiteren ist eine Abluftleitung vorgesehen, die mit einem Abluftanschluß des Gehäuses verbunden ist, um die durch das Gehäuse erwärmte Abluft abzutransportieren. In der Zuluftleitung ist ein Gebläse angeordnet, das die Kühlluftströmung antreibt. Um die Kühlleistung eines solchen Kühlsystems zu beeinflussen, ist es bekannt, die Drehzahl des Gebläses, z.B. über ein Getriebe, zu verändern. Ebenso ist die Verwendung von Sperrorganen, wie z.B. Klappen, Schieber oder Jalousien, bekannt, mit denen der Kühlluftstrom oder Teile davon beeinflußt oder gesperrt werden können. Mit Hilfe dieser Maßnahmen wird somit die dem Gehäuse zur Kühlung zugeführte Luftmenge, also die Zuluftmenge verstellt, um dadurch die Kühlleistung des Kühlsystems zu verändern.

Damit die Kühlung des Gehäuses ordnungsgemäß arbeiten kann, müssen eindeutige und reproduzierbare Strömungsverhältnisse bei der Durchströmung des Gehäuses vorliegen. Dies ist jedoch nur dann möglich, wenn die zugeführte Zuluftmenge nicht zu weit von einer der Auslegung des Kühlsystems zugrundegelegten Kühlluftmenge abweicht. Das bedeutet, daß für die Veränderung der Zuluftmenge nur ein relativ kleiner Verstellbereich zur Verfügung steht. Des weiteren bildet sich entlang des Strömungspfades innerhalb des Gehäuses ein Temperaturgradient aus, der im Gehäuse zu unerwünschten Spannungen führen kann.

EP 1046787 offenbart ein Verfahren zur alternativen Beaufschlagung eines Turbinengehäuses mit einem Heiz- oder Kühlmedium. Je nach den Erfordernissen des Turbinenprozesses wird in einem Kreislauf geführte Luft wahlweise erwärmt oder abgekühlt in das Turbinengehäuse eingeleitet. Zu diesem Zwecke sind zwei Wärmeübertrager zum jeweiligen Erwärmen oder Abkühlen in den Strömungspfad eingebunden. Über die Fahrweise der Wärmeübertrager kann die Temperatur der in das Gehäuse eintretenden Luft in einer gewünschten Weise eingestellt werden.
Dieses Verfahren ist mit einem vergleichsweise hohen apparativen Aufwand verbunden.

### Darstellung der Erfindung

Hier will die Erfindung Abhilfe schaffen. Die vorliegende Erfindung beschäftigt sich mit dem Problem, für ein Kühlsystem bzw. für ein Verfahren der eingangs genannten Art eine Ausführungsform anzugeben, die mit geringem Aufwand eine Verstellung der Kühlleistung in einem relativ großen Bereich ermöglicht. Darüber hinaus soll eine Möglichkeit aufgezeigt werden, die den Temperaturgradienten entlang des Strömungspfades im Gehäuse reduziert.

Dieses Problem wird erfindungsgemäß durch ein Kühlsystem mit den Merkmalen des Anspruchs 1 gelöst.

Die Erfindung beruht auf dem allgemeinen Gedanken, die Kühlleistung über die Temperatur der zugeführten Zuluft zu verändern. Da somit die Strömungsverhältnisse bei der Durchströmung des Gehäuses grundsätzlich unverändert bleiben können, kann die Kühlleistung des Kühlsystems durch die Veränderung der Zulufttemperatur in einem sehr großen Bereich verstellt werden. Des weiteren kann durch eine Erhöhung der Zulufttemperatur der sich entlang des Strömungspfades im Gehäuse ausbildende Temperaturgradient reduziert werden, wodurch unerwünschte Spannungen im Gehäuse reduziert bzw. vermieden werden.
Die zur Veränderung der Zulufttemperatur vorgesehenen Mittel weisen eine Umluftleitung auf, welche die Zuluftleitung stromauf des Gebläses mit der Abluftleitung verbindet, wobei in dieser Umluftleitung ein verstellbares Umluft-Sperrorgan angeordnet ist. Bei dieser Ausführungsform wird die Zulufttemperatur durch die Zumischung von mehr oder weniger Abluft zur Zuluft verändert. Je mehr Abluft der Zuluft zugemischt wird, desto höher ist die Zulufttemperatur. Ein entscheidender Vorteil dieser Ausführungsform ist darin zu sehen, daß zur Erhöhung der Zulufttemperatur keine zusätzliche Energie erforderlich ist, da die benötigte Wärme der Abluft entnommen wird. Darüber hinaus ist eine solche Ausführungsform vergleichsweise preiswert realisierbar.

Bei einer zweckmäßigen Weiterbildung kann das Gebläse so ausgebildet sein, daß die vom Gebläse geförderte Luftmenge verstellbar ist. Hierbei wird die an sich bekannte Maßnahme zur Veränderung der Kühlleistung mit der gleichwirkenden erfindungsgemäßen Maßnahme kombiniert, wodurch sich zusätzliche Einstellmöglichkeiten ergeben.

Bei einer besonderen Ausführungsform kann in der Abluftleitung stromab der Umluftleitung ein verstellbares Abluft-Sperrorgan angeordnet sein. Alternativ oder zusätzlich kann in der Zuluftleitung stromauf der Umluftleitung ein verstellbares Zuluft-Sperrorgan angeordnet sein. Bei geöffnetem Umluft-Sperrorgan und bei geschlossenem Abluft-Sperrorgan und/oder bei geschlossenem Zuluft-Sperrorgan kann somit ein reiner Umluftbetrieb eingestellt werden, bei dem sich die Kühlleistung im wesentlichen durch Leckagen oder konvektive Wärmeabgabe ergibt.

Das der Erfindung zugrundeliegende Problem wird auch durch ein Verfahren mit den Merkmalen des Anspruchs 9 gelöst. Auch hier beruht die Erfindung auf dem allgemeinen Gedanken, die Kühlleistung über die Zulufttemperatur zu beeinflussen.

Weitere wichtige Merkmale und Vorteile der Erfindung ergeben sich aus den Unteransprüchen, aus der Zeichnung und aus der zugehörigen Figurenbeschreibung anhand der Zeichnung.

### Kurze Beschreibung der Zeichnung

Ein bevorzugtes Ausführungsbeispiel der Erfindung ist in der Zeichnung dargestellt und wird in der nachfolgenden Beschreibung näher erläutert.

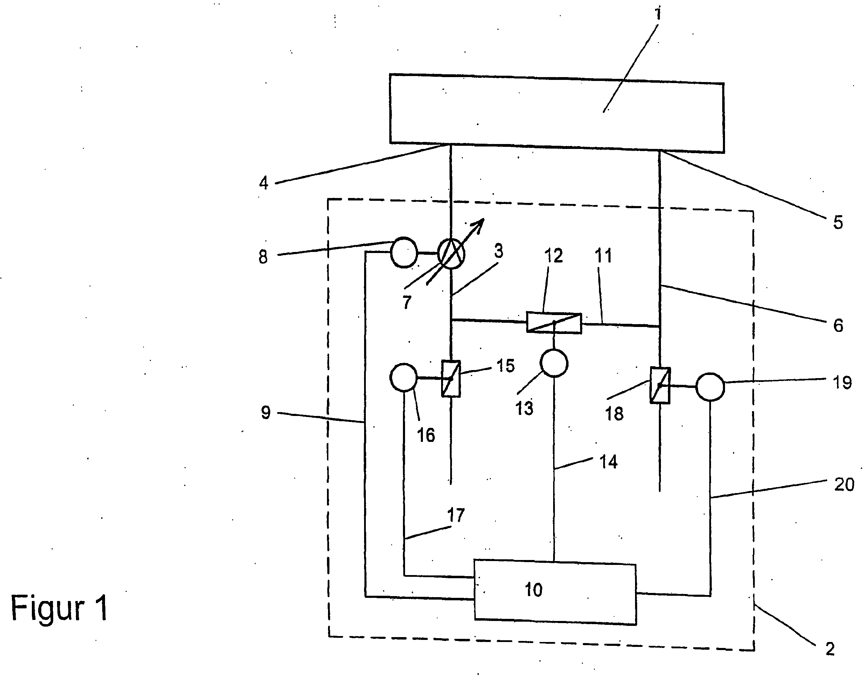

Die einzige Figur 1 zeigt eine schematisierte Prinzipdarstellung eines erfindungsgemäßen Kühlsystems.

### Wege zur Ausführung der Erfindung

In Fig.1 ist ein Gehäuse bzw. Gehäuseteil 1 einer im übrigen nicht dargestellten Strömungsmaschine, z.B. einer Turbine, durch ein Rechteck vereinfacht dargestellt. Dieses Gehäuse 1 soll mit Hilfe eines erfindungsgemäßen Kühlsystems 2 gekühlt werden. Zu diesem Zweck umfaßt das Kühlsystem 2 eine Zuluftleitung 3, die an einen Zuluftanschluß 4 des Gehäuses 1 angeschlossen ist. Im Inneren des Gehäuses 1 ist ein hier nicht dargestellter Strömungspfad ausgebildet, der eingangsseitig mit dem Zuluftanschluß 4 und ausgangsseitig mit einem Abluftanschluß 5 des Gehäuses 1 kommuniziert. An diesen Abluftanschluß 5 ist eine Abluftleitung 6 des Kühlsystems 2 angeschlossen.

In der Zuluftleitung 3 ist ein Gebläse 7 angeordnet, dessen Antriebsmotor 8 über eine Steuerleitung 9 von einer Steuereinrichtung 10 des Kühlsystems 2 betätigbar ist. Bei der hier gezeigten bevorzugten Ausführungsform ist das Gebläse 7 hinsichtlich seiner Förderleistung einstellbar. Beispielsweise kann die vom Gebläse 7 geförderte Luftmenge über die Drehzahl des Antriebsmotors 8 verstellt werden.

Des weiteren besitzt das Kühlsystem 2 eine Umluftleitung 11, mit der die Zuluftleitung 3 stromauf des Gebläses 7 mit der Abluftleitung 6 verbunden ist. In dieser Umluftleitung 11 ist ein Umluft-Sperrorgan 12 angeordnet, das mit Hilfe eines zugehörigen Stellgliedes 13 verstellbar ist. Die Betätigung des Stellgliedes 13 erfolgt wiederum über eine entsprechende Steuerleitung 14, die mit der Steuereinrichtung 10 verbunden ist. Über das Stellglied 13 kann insbesondere der Öffnungsquerschnitt des Umluft-Sperrorgans 12 zwischen einer vollständig gesperrten Sperrstellung und einer vollständig geöffneten Öffnungsstellung verstellt werden, wobei außerdem wenigstens eine Zwischenstellung einstellbar ist.

In der Zuluftleitung 3 ist stromauf der Umluftleitung 11 ein Zuluft-Sperrorgan 15 angeordnet, das über ein zugeordnetes Stellglied 16 verstellbar ist, das über eine Steuerleitung 17 ebenfalls von der Steuereinrichtung 10 betätigbar ist. Auch das Zuluft-Sperrorgan 15 ist vorzugsweise zwischen einer vollständig geöffneten Offenstellung und einer vollständig geschlossenen Schließstellung verstellbar, wobei auch hier zumindest eine Zwischenstellung einstellbar ist.

In der Abluftleitung 6 ist stromab der Umluftleitung 11 ein Abluft-Sperrorgan 18 angeordnet, das mit Hilfe eines zugehörigen Stellgliedes 19 zwischen einer vollständig geschlossenen Schließstellung und einer vollständig geöffneten Offenstellung verstellbar ist, wobei auch hier vorzugsweise mindestens eine Zwischenstellung einstellbar ist. Das Stellglied 19 ist über eine Steuerleitung 20 ebenfalls von der Steuereinrichtung 10 betätigbar.

Die Kühlung des Gehäuses 1 wird mit Hilfe des erfindungsgemäßen Kühlsystems 2 wie folgt durchgeführt:

Die Steuereinrichtung 10 ermöglicht eine Betriebsweise A, bei der das Umluft-Sperrorgan 12 geschlossen ist und bei der das Zuluft-Sperrorgan 15 und das Abluft-Sperrorgan 18 geöffnet sind. In dieser Betriebsweise A arbeitet das erfindungsgemäße Kühlsystem 2 somit wie ein herkömmliches Kühlsystem: Über die Zuluftleitung 3 wird aus einer Umgebung des Gehäuses 1 Frischluft angesaugt und dem Gehäuse 1 durch den Zuluftanschluß 4 zugeführt. Innerhalb des Gehäuses 1 folgt die so geförderte Zuluft dem Strömungspfad, kühlt dabei das Gehäuse 1, wobei sich die geförderte Luft erwärmt. Durch den Abluftanschluß 5 tritt die erwärnte Abluft aus dem Gehäuse 1 aus und wird über die Abluftleitung 6 abtransportiert. Beispielsweise kann die Abluft über einen Wärmeübertrager wieder in die Umgebung des Gehäuses 1 gefördert werden. In der Betriebsweise A sind relativ geringe Variationen der Kühlleistung durch eine entsprechende Veränderung der vom Gebläse 7 geförderten Zuluftmenge realisierbar. Für die Betriebsweise A sind das Zuluft-Sperrorgan 15 und das Abluft-Sperrorgan 18 nicht erforderlich.

Die Steuereinrichtung 10 ermöglicht außerdem eine Betriebsweise B, bei der das Umluftsperrorgan 12 mehr oder weniger geöffnet ist, wobei das Zuluft-Sperrorgan 15 und das Abluftsperrorgan 18 zunächst nach wie vor vollständig geöffnet sind. Durch diese Schaltung gelangt Zuluft auf die Saugseite des Gebläses 7, so daß der Zuluft mehr oder weniger Abluft zugemischt wird. Da die Abluft eine höhere Temperatur aufweist als die aus der Umgebung angesaugte Frischluft, kann dadurch die Zulufttemperatur erhöht werden. Je mehr Abluft der Zuluft zugemischt wird, desto höher ist die Zulufttemperatur. Durch die Erhöhung der Zulufttemperatur sinkt die Kühlleistung des Kühlsystems 2. Auch für die Betriebsweise B sind das Zuluft-Sperrorgan 15 und das Abluft-Sperrorgan 18 grundsätzlich nicht erforderlich. Um den Anteil an Abluft in der Zuluft zu vergrößern, können zusätzlich das Zuluft-Sperrorgan 15 und/oder das Abluft-Sperrorgan 18 mehr oder weniger geschlossen werden.

Die Steuereinrichtung 10 ermöglicht außerdem eine Betriebsweise C, bei der das Umluft-Sperrorgan 12 geöffnet ist und bei der das Zuluft-Sperrorgan 15 und/oder das Abluft-Sperrorgan 18 geschlossen ist. Hierdurch ist ein quasi reiner Umluftbetrieb zur Erzeugung einer minimalen Kühlleistung eingestellt. Für die Betriebsweise C ist somit entweder das Zuluft-Sperrorgan 15 oder das Abluft-Sperrorgan 18 nicht erforderlich. Für diesen Umluftbetrieb wird jedoch eine Schaltstellung bevorzugt, bei der das Abluft-Sperrorgan 18 geschlossen ist und das Zuluft-Sperrorgan 15 mehr oder weniger geöffnet ist, um Luftverluste aufgrund von Leckagen auszugleichen. Beim Umluftbetrieb erfolgt die Kühlung des Gehäuses 1 im wesentlichen durch Leckagemengen und durch konvektive Wärmeabstrahlung des Gehäuses 1.

Schließlich ermöglicht die Steuerung 10 noch eine Betriebsweise D, bei der das Umluft-Sperrorgang 12 und das Zuluft-Sperrorgan 15 und/oder das Abluft-Sperrorgang 18 mehr oder weniger geöffnet sind. Durch die Einstellung verschiedener Zwischenstellungen bei den Sperrorganen 12,15,18 ergeben sich vielfältige Variationsmöglichkeiten für eine relativ feinstufige Einstellung der Zulufttemperatur.

Beim erfindungsgemäßen Kühlsystem 2 läßt sich die Kühlleistung durch die Beeinflussung der Zulufttemperatur in einem sehr großen Bereich verstellen. Zum Einstellen einer minimalen Zulufttemperatur, also zum Einstellen einer maximalen Kühlleistung, sind die Sperrorgane 12,15,18 so geschaltet, daß der Zuluft keine Abluft zugemischt wird. Die Zulufttemperatur entspricht dann im wesentlichen der Frischlufttemperatur. Zum Einstellen einer maximalen Zulufttemperatur, also einer minimalen Kühlleistung, werden die Sperrorgane 12,15,18 so geschaltet, daß der Zuluft die gesamte Abluft zugeführt wird. Die Zulufttemperatur entspricht dann im wesentlichen der Ablufttemperatur.

Eine weitere Einstellmöglichkeit für die Beeinflussung der Kühlleistung des Kühlsystems 2 kann bei allen Betriebsweisen A bis D durch eine entsprechende Veränderung der vom Gebläse 7 geförderten Luftmenge erreicht werden.

Das erfindungsgemäße Kühlsystem 2 kann zweckmäßigerweise so dimensioniert werden, daß es die für den optimalen Betriebspunkt der jeweiligen Strömungsmaschine erforderliche Kühlleistung bereits dann erbringt, wenn das Umluft-Sperrorgan 12 nicht vollständig geschlossen ist. Durch diese Auslegung besitzt das Kühlsystem 2 eine mehr oder weniger große Leistungsreserve, die z.B. bei einem Notfall aktiviert werden kann. Entsprechendes gilt für die Förderleistung des einstellbaren Gebläses 7.

Die hier verwendeten Sperrorgane 12,15,18 können in an sich bekannter Weise durch Klappen, Schieber, Jalousien od.dgl. realisiert sein.

### Bezugszeichenliste

- 1: Gehäuse/Gehäuseteil
- 2: Kühlsystem
- 3: Zuluftleitung
- 4: Zuluftanschluß
- 5: Abluftanschluß
- 6: Abluftleitung
- 7: Gebläse
- 8: Antriebsmotor
- 9: Steuerleitung
- 10: Steuereinrichtung
- 11: Umluftleitung
- 12: Umluft-Sperrorgan
- 13: Stellglied
- 14: Steuerleitung
- 15: Zuluft-Sperrorgan
- 16: Stellglied
- 17: Steuerleitung
- 18: Abluft-Sperrorgan
- 19: Stellglied
- 20: Steuerleitung

## Patentansprüche

1. Kühlsystem zur Kühlung thermisch beanspruchter Gehäuse (1) oder Gehäuseteile bei Strömungsmaschinen, insbesondere bei einer Turbine, mit einer Zuluftleitung (3), die mit einem Zuluftanschluß (4) des Gehäuses (1) verbunden ist, mit einer Abluftleitung (6), die mit einem Abluftanschluß (5) des Gehäuses (1) verbunden ist, mit einem Gebläse (7), das in der Zuluftleitung (3) angeordnet ist und mit Mitteln (11,12) zur Veränderung der Zulufttemperatur,
**dadurch gekennzeichnet,**
**daß** die Mittel zur Veränderung der Zulufttemperatur eine Umluftleitung (11) aufweisen, welche die Zuluftleitung (3) stromauf des Gebläses (7) mit der Abluftleitung (6) verbindet, wobei in der Umluftleitung (11) ein verstellbares Umluft-Sperrorgan (12) angeordnet ist.

2. Kühlsystem nach Anspruch 1,
**dadurch gekennzeichnet,**
**daß** das Gebläse (7) so ausgebildet ist, daß die vom Gebläse (7) geförderte Luftmenge verstellbar ist.

3. Kühlsystem zumindest nach Anspruch 1,
**dadurch gekennzeichnet,**
**daß** in der Abluftleitung (6) stromab der Umluftleitung (11) ein verstellbares Abluft-Sperrorgan (18) angeordnet ist.

4. Kühlsystem zumindest nach Anspruch 1,
**dadurch gekennzeichnet,**
**daß** in der Zuluftleitung (3) stromauf der Umluftleitung (11) ein verstellbares Zuluft-Sperrorgan (15) angeordnet ist.

5. Kühlsystem zumindest nach Anspruch 1,
**dadurch gekennzeichnet,**
**daß** eine Steuereinrichtung (10) vorgesehen ist, die mit den verstellbaren Komponenten (7,12,15,18) des Kühlsystems (2) zu deren Betätigung verbunden ist, wobei die Steuereinrichtung (10) eine Betriebsweise (A) ermöglicht, bei der das Umluft-Sperrorgan (12) geschlossen ist und bei der das gegebenenfalls vorhandene Zuluft-Sperrorgan (15) und/oder das gegebenenfalls vorhandene Abluft-Sperrorgan (18) geöffnet sind, und wobei die Steuereinrichtung (10) eine Betriebsweise (B) ermöglicht, bei der das Umluft-Sperrorgan (12) mehr oder weniger geöffnet ist und bei der das gegebenenfalls vorhandene Zuluft-Sperrorgan (15) und/oder das gegebenenfalls vorhandene Abluft-Sperrorgan (18) geöffnet sind.

6. Kühlsystem nach Anspruch 5,
**dadurch gekennzeichnet,**
**daß** die Steuerung (10) eine Betriebsweise (C) ermöglicht, bei der das Umluft-Sperrorgan (12) geöffnet ist und bei der das Zuluft-Sperrorgan (15) und/oder das Abluft-Sperrorgan (18) geschlossen ist.

7. Kühlsystem nach Anspruch 5 oder 6,
**dadurch gekennzeichnet,**
**daß** die Steuereinrichtung (10) eine Betriebsweise (D) ermöglicht, bei der das Umluft-Sperrorgan (12) und das Zuluft-Sperrorgan (15) und/oder das Abluft-Sperrorgan (18) mehr oder weniger geöffnet sind.

8. Verfahren zum Kühlen thermisch beanspruchter Gehäuse (1) oder Gehäuseteile bei Strömungsmaschinen, insbesondere bei einer Turbine, wobei dem Gehäuse (1) Zuluft zugeführt wird und wobei vom Gehäuse (1) Abluft abgeführt wird und die Kühlleistung durch Verstellen der Zulufttemperatur verändert wird,
**dadurch gekennzeichnet,**
**daß** der Zuluft zum Verstellen der Zulufttemperatur mehr oder weniger Abluft zugemischt wird.

9. Verfahren nach Anspruch 8,
**dadurch gekennzeichnet,**
**daß** der Zuluft zum Einstellen einer minimalen Zulufttemperatur keine Abluft zugemischt wird.

10. Verfahren nach Anspruch 8,
**dadurch gekennzeichnet,**
**daß** der Zuluft zum Einstellen einer maximalen Zulufttemperatur die gesamte Abluft zugemischt wird.

## Claims

1. Cooling system for cooling thermally stressed casings (1) or casing parts in turbomachines, in particular in a turbine, with an inflow-air line (3) which is connected to an inflow-air connection (4) of the casing (1), with an exhaust-air line (6) which is connected to an exhaust-air connection (5) of the casing (1), with a blower (7) which is arranged in the inflow-air line (3), and with means (11, 12) for varying the inflow-air temperature, **characterized in that** the means for varying the inflow-air temperature have a circulating-air line (11) which connects the inflow-air line (3), upstream of the blower (7), to the exhaust-air line (6), an adjustable circulating-air shut-off member (12) being arranged in the circulating-air line (11).

2. Cooling system according to Claim 1, **characterized in that** the blower (7) is designed such that the air quantity conveyed by the blower (7) is adjustable.

3. Cooling system at least according to Claim 1, **characterized in that** an adjustable exhaust-air shut-off member (18) is arranged, downstream of the circulating-air line (11), in the exhaust-air line (6).

4. Cooling system at least according to Claim 1, **characterized in that** an adjustable inflow-air shut-off member (15) is arranged, upstream of the circulating-air line (11), in the inflow-air line (3).

5. Cooling system at least according to Claim 1, **characterized in that** a control device (10) is provided, which is connected to the adjustable components (7, 12, 15, 18) of the cooling system (2) for their actuation, the control device (10) making it possible to have an operating mode (A), in which the circulating-air shut-off member (12) is closed and in which the inflow-air shut-off member (15), present if appropriate, and/or the exhaust-air shut-off member (18), present if appropriate, are/is open, and the control device (10) making it possible to have an operating mode (B), in which the circulating-air shut-off member (12) is open to a greater or lesser extent and in which the inflow-air shut-off member (15), present if appropriate, and/or the exhaust-air shut-off member (18), present if appropriate, are/is open.

6. Cooling system according to Claim 5, **characterized in that** the control (10) makes it possible to have an operating mode (C) in which the circulating-air shut-off member (12) is open and in which the inflow-air shut-off member (15) and/or the exhaust-air shut-off member (18) are/is closed.

7. Cooling system according to Claim 5 or 6, **characterized in that** the control device (10) makes it possible to have an operating mode (D), in which the circulating-air shut-off member (12) and the inflow-air shut-off member (15) and/or the exhaust-air shut-off member (18) are open to a greater or lesser extent.

8. Method for cooling thermally stressed casings (1) or casing parts in turbomachines, in particular in a turbine, inflow air being supplied to the casing (1) and exhaust air being discharged from the casing (1), and the cooling power being varied by the adjustment of the inflow-air temperature, **characterized in that**, to adjust the inflow-air temperature, more or less exhaust air is admixed to the inflow air.

9. Method according to Claim 8, **characterized in that**, to set a minimum inflow-air temperature, no exhaust air is admixed to the inflow air.

10. Method according to Claim 8, **characterized in that**, to set a maximum inflow-air temperature, the entire exhaust air is admixed to the inflow air.

## Revendications

1. Système de refroidissement pour refroidir les carters (1) ou pièces de carter, sollicités thermiquement, dans les turbomachines, en particulier dans une turbine, avec une conduite d'air d'admission (3), qui est reliée à un raccordement d'air d'admission (4) du carter (1), avec une conduite d'air d'évacuation (6), qui est reliée à un raccordement d'air d'évacuation (5) du carter (1), avec une soufflante (7), qui est disposée dans la conduite d'air d'admission (3) et avec des moyens (11, 12) pour modifier la température d'air d'admission,
**caractérisé en ce que**,
les moyens pour modifier la température d'air d'admission présentent une conduite d'air en circulation (11), laquelle relie la conduite d'air d'admission (3) en amont de la soufflante (7) à la conduite d'air d'évacuation (6), un organe de blocage d'air en circulation (12) étant disposé dans la conduite d'air en circulation (11).

2. Système de refroidissement selon la revendication 1,
**caractérisé en ce que**,
la soufflante (7) est formée de telle façon que la quantité d'air débitée par la soufflante (7) est ajustable.

3. Système de refroidissement au moins selon la revendication 1,
**caractérisé en ce que**,
un organe de blocage d'air d'évacuation ajustable (18) est disposé dans la conduite d'air d'évacuation (6) en aval de la conduite d'air en circulation (11).

4. Système de refroidissement au moins selon la revendication 1,
**caractérisé en ce que**,
un organe de blocage d'air d'admission (15) est disposé dans la conduite d'air d'admission (3) en amont de la conduite d'air en circulation (11).

5. Système de refroidissement au moins selon la revendication 1,
**caractérisé en ce que**,
un dispositif de commande (10) est prévu, qui est relié aux composants ajustables (7, 12, 15, 18) du système de refroidissement (2) en vue de leur actionnement, le dispositif de commande (10) permet un mode de fonctionnement (A), dans lequel l'organe de blocage d'air en circulation (12) est fermé et dans lequel l'organe de blocage d'air d'admission éventuellement présent (15) et/ou l'organe de blocage d'air d'évacuation éventuellement présent (18) sont ouverts, et le dispositif de commande (10) permet un mode de fonctionnement (B), dans lequel l'organe de blocage d'air en circulation (12) est plus ou moins ouvert et dans lequel l'organe de blocage d'air d'admission éventuellement présent (15) et/ou l'organe de blocage d'air d'évacuation éventuellement présent (18) sont ouverts.

6. Système de refroidissement selon la revendication 5,
**caractérisé en ce que**,
la commande (10) permet un mode de fonctionnement (C), dans lequel l'organe de blocage d'air en circulation (12) est ouvert, et dans lequel l'organe de blocage d'air d'admission (15) et/ou l'organe de blocage d'air d'évacuation (18) est fermé.

7. Système de refroidissement selon la revendication 5 ou 6,
**caractérisé en ce que**,
le dispositif de commande (10) permet un mode de fonctionnement (D), dans lequel l'organe de blocage d'air en circulation (12) et l'organe de blocage d'air d'admission (15) et/ou l'organe de blocage d'air d'évacuation (18) sont plus ou moins ouverts.

8. Procédé pour refroidir les carters (1) ou pièces de carter sollicités thermiquement dans les turbomachines, en particulier dans une turbine, de l'air d'admission étant introduit dans le carter (1) et de l'air d'évacuation étant évacué du carter (1) et la puissance de refroidissement étant modifiée par ajustement de la température d'air d'admission,
**caractérisé en ce que**,
plus ou moins d'air d'évacuation est mélangé à l'air d'admission pour ajuster la température d'air d'admission.

9. Procédé selon la revendication 8,
**caractérisé en ce que**,
aucun air d'évacuation n'est mélangé à l'air d'admission pour régler une température d'air d'admission minimale.

10. Procédé selon la revendication 8,
**caractérisé en ce que**,
tout l'air d'évacuation est mélangé à l'air d'admission pour régler une température d'air d'admission maximale.
